# EUROPEAN PATENT SPECIFICATION

(11) **EP 0 696 944 B1**
(45) Date of publication and mention of the grant of the patent: **10.09.1997**
(21) Application number: 94912045.5
(22) Date of filing: 11.04.1994
(51) Int. Cl.: B23C 5/10

(54) **CUTTER TOOL**
SCHNEIDWERKZEUG
OUTIL COUPANT

(30) Priority: 20.04.1993 GB 9308102
(43) Date of publication of application: 21.02.1996
(73) Proprietor: FISHER KARPARK HOLDINGS LIMITED, Halifax, West Yorkshire HX1 1EB (GB)
(72) Inventor: SIDDALL, Keith, Sheffield S6 3AH (GB)
(74) Representative: Sherrard-Smith, Hugh
(86) International application number: GB9400763
(87) International publication number: WO9423875

(56) References cited:
- EP-A- 0 062 693
- DE-A- 3 539 103
- DE-B- 2 533 079
- FR-A- 2 034 984
- FR-A- 2 194 513
- FR-A- 2 649 341
- US-A- 4 083 643
- US-A- 4 957 397

## Description

The present invention relates to a cutter tool according to the precharacterising portion of claim 1.

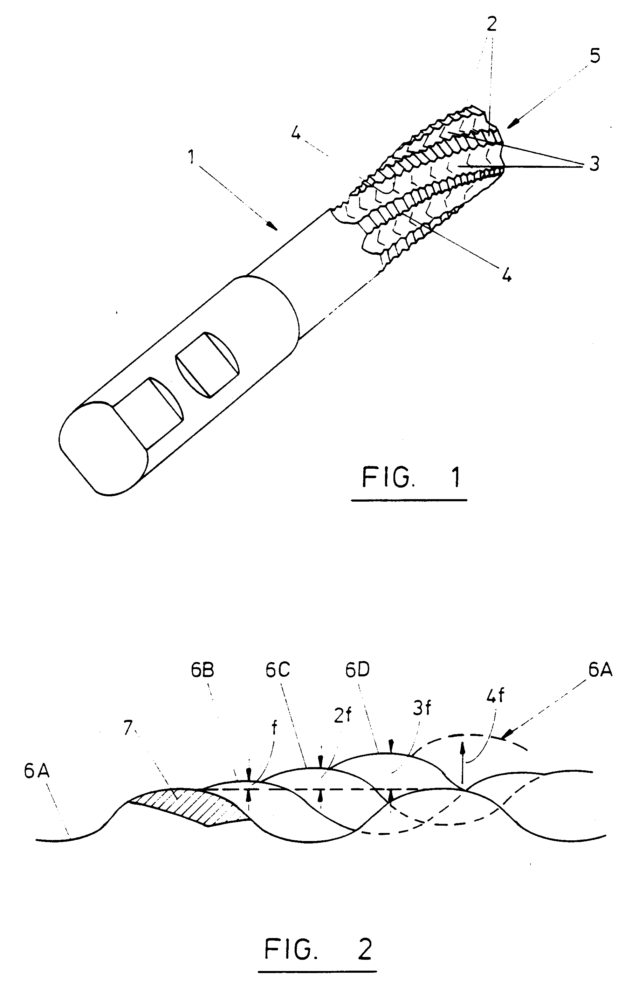

Figure 1 is a schematic perspective view of a cutter 1 including a number of cutting flutes 2, the flutes 2 being spaced from each other and extending helically from one end towards the other. Helically extending grooves 3 extend between each flute.

In use, the cutter 1 is arranged to be rotated in a clockwise direction and the advancing front edge 4 of each flute engages the metal surface to be cut and removes a chip therefrom.

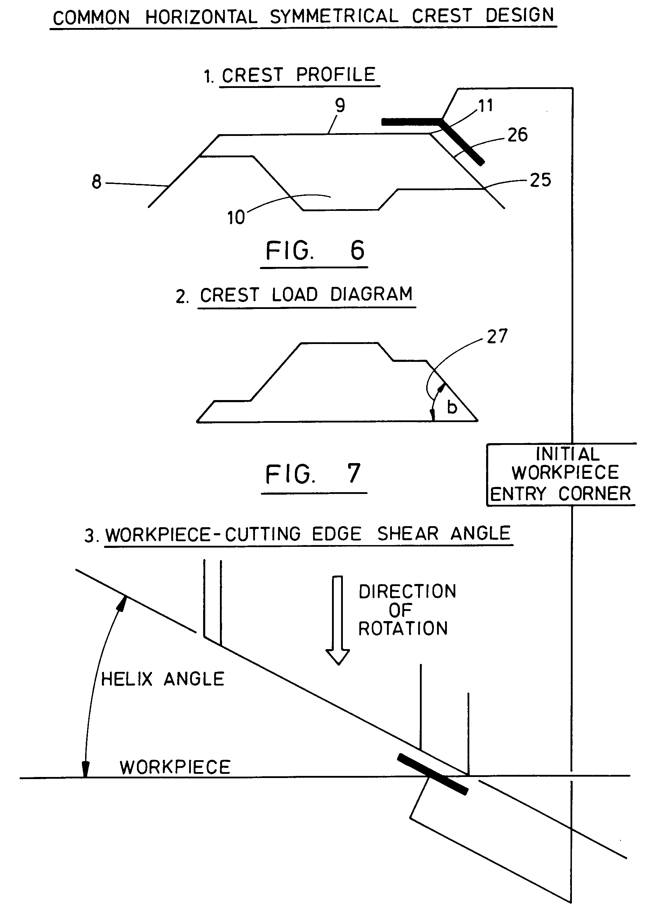

Looking in a tangential direction relative to the rotational axis at each advancing front edge, it can be seen that a portion of the edge 4 of a particular flute nearer the free end 5 of the cutter engages the metal surface in advance of a portion spaced slightly further from the free end. This is shown more clearly in Figure 5 which is a radial view of a cutting edge 6A showing the relative position of a workpiece 24 which the tool is advancing towards. In this specification, where the leading and trailing edges are referred to, those references relate to portions of the edge which engage the surface first and last with respect to the direction of movement of the cutting edge.

The front edge is profiled, when viewed tangentially relative to the rotational axis, and that profile continues around the circumferential extent of each particular flute. However, the profiles of succeeding flutes are slightly offset relative to each other.

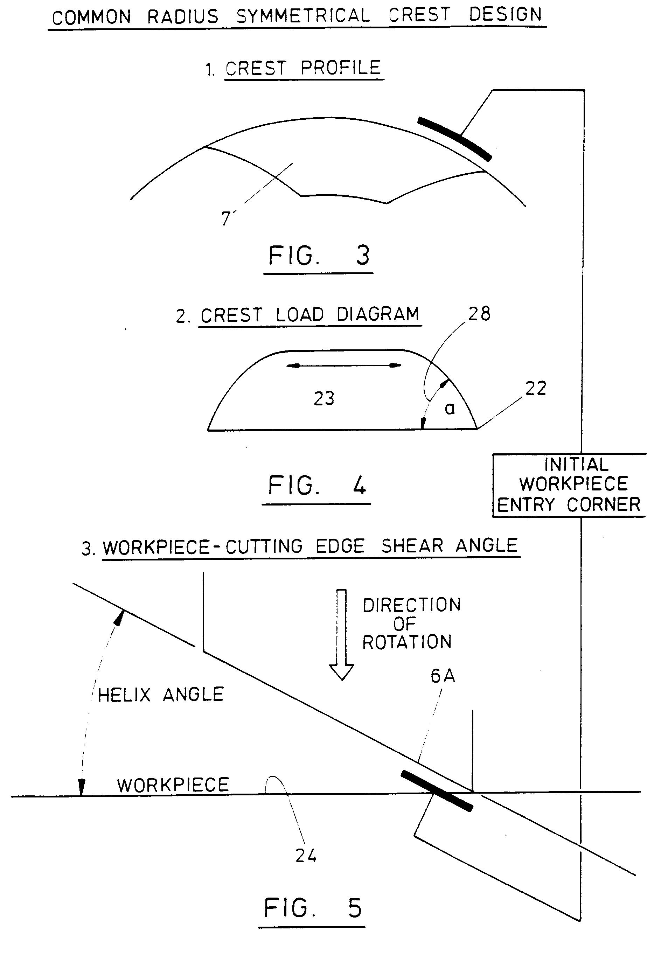

Figure 2 is a tangential view showing the profile of a prior front edge 6A which presents a sinusoidal configuration that is symmetrical about a line parallel to the rotational axis. Also shown in Figure 2 is the position at which the leading edges of the other flutes in a four-fluted cutter would occupy as they pass through the same circumferential position as the cutting edge 6A. After the edge of one flute has made a cut, and before the next edge of the adjacent flute has made a cut the tool will have advanced relative to the workpiece through a distance "f". That happens as the edge of each flute make cuts. Accordingly when the edge 6A next comes to make a cut it will be encountering metal 4 x "f" deep, as shown in chain lines in Figure 2. Accordingly the cut afforded by the subsequent edges 6B, 6C and 6D, between the cuts made by the upper part of the sinusoidal edge 6A is readily apparent.

The shaded area shows the shape of a chip 7 which is taken out of the metal being cut by the upper extent of the sinusoidal edge 6A. The shape of the chip 7 is shown in more detail in Figure 3. Figure 4 shows the crest load along the part of the edge doing the cutting. It can be seen that the loading rises significantly from the point 22 where the edge initially cuts the workpiece before rapidly falling off to give an even loading across the extent 23 of the edge. Although the sinusoidal shape of the cutting edge gives a good strength to the edge, where the load rises sharply there is a significant resistance to penetration because of the relatively flat edge which is being presented to the workpiece.

Figure 6 shows the profile of another front edge 8 of a known cutter having a symmetrical flat cylindrical crest 9. The shape of a chip taken by the cutter is shown at 10. The cutter is provided with a point 11 caused by a change in angle along the cutting edge very near the location where the edge 8 initially contacts the metal, as shown at 25. The provision of the point 11 significantly increases the ease with which the edge can penetrate the relatively thick metal at that point, and the sharper the point 11, the greater the ease of penetration. In the illustrated case the included angle is 120°.

Figure 7 shows the load diagram for the edge 8. The relatively steep initial edge 26 leading from the point of entry 25 affords a significantly reduced loading rate from the cutter described in relation to Figures 3 and 4. That lower rate is reflected by the smaller angle 27 shown in Figure 7 as compared to the angle 28 shown in Figure 4.

Although the sharp point 11 shown in Figure 6 gives good penetration it is also subject to extremely rapid wear.

US 4083643 representing the closest prior art discloses a cutting tool having cutting edges that are straight and that are supported by grooves which serve to separate the adjacent teeth on a land.

It is an object of the present invention to attempt to overcome at least some of the above disadvantages.

According to one aspect of the present invention a cutter tool includes a cutting edge extending along the body, the cutting edge also extending at an angle to the intended direction of rotation whereby a leading part of the cutting edge is arranged to cut a chip in advance of the remainder of the cutting edge with respect to the intended direction of movement of the cutting part of the tool, characterized in that the rate of change along the intended axis of rotation of the radial distance of the cutting edge from the intended axis of rotation undergoes a relatively sudden change in a region towards the leading part which leading part is arranged to cut a portion of a workpiece, and a portion of the cutting edge trailing that region extends further from the intended axis of rotation than does that region.

The region may be comprised by a point, a sharp point or a corner when the cutting edge is viewed tangentially from in front of the intended direction of travel.

The trailing cutting edge from said region may extend further from the intended axis of rotation than the region immediately adjacent to the region.

The region may be immediately adjacent to the leading part.

The cutting edge from the region to the leading part may include a linear edge, and alternatively or additionally the cutting edge trailing the region may include a linear extent, when viewed from in front of the intended direction of rotation.

The greater proportion of the axial extent of the cutting edge may be comprised by an edge which increases in radial distance from the intended axis of rotation as the distance from the leading part increases.

The greater proportion of the axial extent of the cutting edge may be comprised by a linear edge, when viewed from in front of the intended direction of advancement.

The cutting edge may extend outwardly and rearwardly at an angle of between 1° and 30° and preferably between 3° and 17° and preferably between 5° and 15° and preferably between 5° and 11° with respect to the intended axis of rotation of the tool, and may so extend from the region and, alternatively or additionally may so extend along the greater proportion of the axial extent of the cutting edge.

Preferably the leading portion of the cutting edge adjacent to the leading point extends at a greater angle to the intended axis of rotation of the cutter tool than the majority of the remainder of the cutting edge. That angle may be between 30° and 60° and is preferably in the region of 45°.

The cutter tool may include a trailing portion of the cutting edge which is arranged to cut a chip last with respect to the intended direction of movement of the tool and that trailing portion may extend at a greater angle to the intended direction of rotation than the majority of the remainder of the cutting edge. That angle may be in the region of 45°.

The leading part may be arranged to be located nearer to the free end of the tool than the remainder of the cutting edge.

Preferably an elongate edge may include a plurality of cutting edges spaced along its length. The elongate edge may extend helically around the tool.

The cutting edge may be asymmetric with respect to a line parallel to the rotational axis.

The elongate edge may be coated, for instance with physical vapour deposition techniques.

According to a further aspect of the present invention a method of manufacturing a cutter tool as herein referred to comprises making a cutter tool with a cutting edge extending along the body, the cutting edge also extending at an angle to the intended direction of rotation whereby a leading part of the cutting edge is arranged to cut a chip in advance of the remainder of the cutting edge with respect to the intended direction of movement of the cutting part of the tool, characterised in that the method further comprises making the rate of change along the intended direction of rotation of the radial distance of the cutting edge from the intended axis of rotation undergo a relatively sudden change in a region towards the leading part, and making a portion of the cutting edge trailing that region extend further from the intended axis of rotation than does that region.

The method may comprise making the greater proportion of the axial extent of the cutting edge straight, when viewed from in front of the intended direction of advancement.

The method may comprise making a cutter tool by grinding the tool to create at least part of the cutting edge.

The present invention may be carried into practice in various ways but one embodiment will now be described by way of example and with reference to the accompanying drawing, in which:
Figure 8 is a tangential view of a front asymmetric edge 12A according to one embodiment of the present invention;
Figure 9 is a schematic view of a part of the front edge 12A showing the shape of chip 13 which is removed from metal being cut; and
Figure 10 is a view of the load along the front edge 12A.

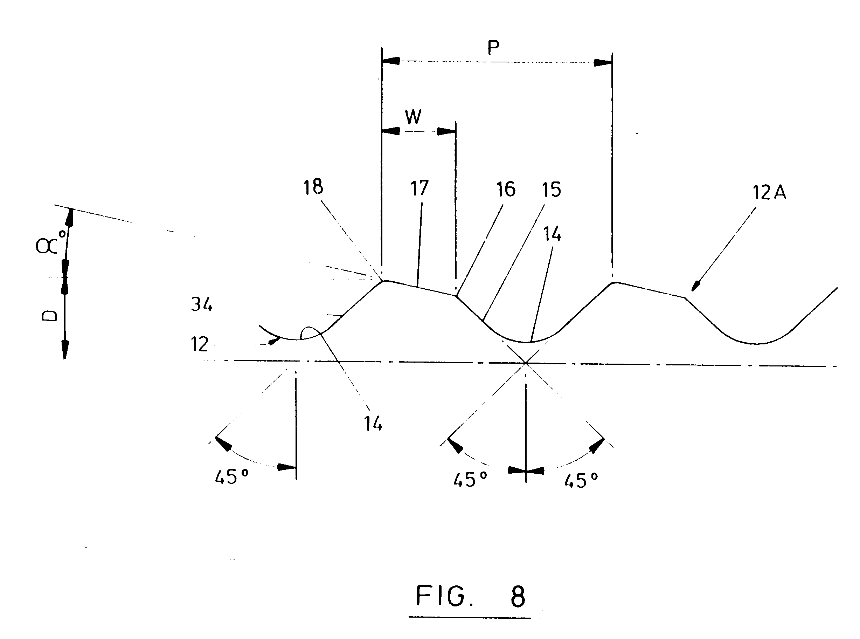

As shown in Figure 8, the asymmetric cutting edge has a recessed arcuate valley 14 which leads to a straight rearwardly and outwardly inclined steep edge 15 which, at the point 16 then changes to a further rearwardly and outwardly inclined edge 17 of less steepness. The inclination of this edge 17 to the rotational axis of the tool may be between 1° and 30° and is preferably between 3° and 17°, and is preferably between 5° and 15° or 5° and 11°. The inclination of the edge 15 to the rotational axis may be between 30° and 60° and is shown as being 45°.

The rear part of the edge 17 turns through a small radius 18 before continuing rearwardly but inwardly with a straight edge 34 which leads into the arcuate portion of the following valley 14.

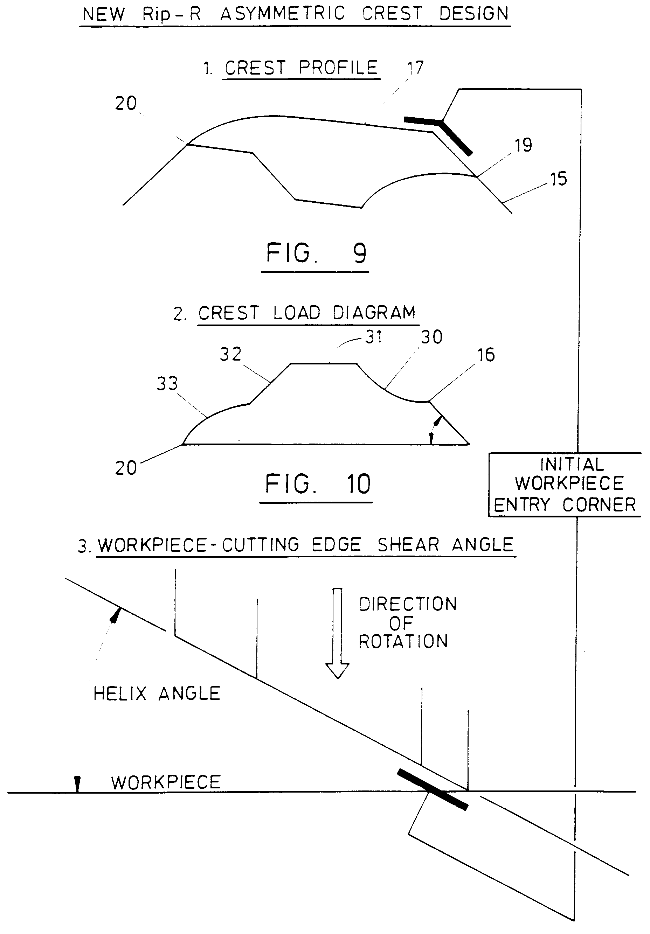

Figure 9 shows that portion of the cutting edge 12A which actually cuts into the metal.

Near the uppermost part of the steep edge 15 is the leading portion of the edge 12A which first cuts into the metal at the point 19. As the edge 15 has a steep angle of inclination, it achieves a good entry into the metal being cut. Figure 10 shows the crest load. The loading on the edge going towards the trailing part away from the point 16 rises, initially very gradually, along the curve 30 before levelling out along the length 31 and then falling linearly at 32 and then in a curved direction at 33.

The loading achieved along the part of the edge trailing the point 16 is significantly increased to the corresponding loading shown in Figure 7. This increase in loading is due to the outwardly and rearwardly diverging edge 17 which is caused to remove a greater amount of metal. Accordingly wear of the edge is spread much more evenly along the length, thereby giving a longer life as less wear occurs at any one point. Furthermore, vibration is reduced as the load is not concentrated in one region.

Another advantage of having the edge 17 diverging outwardly and rearwardly is that the point 16 is able to be located nearer to the initial point of entry into the metal (as the edge 17 removes a significant amount of metal) thereby again reducing the loading on the leading part of the cutting edge.

The trailing edge leaves the metal along the steep edge 18 at the point 20 thereby giving a very good exit angle from the metal. The good entry and exit from the metal breaks into and off the chip very readily thereby reducing noise and vibration when operating the cutter.

The relative uniformity of depth of cut reduces the likelihood of the tool vibrating to any detrimental extent such as is occasioned when the depth of cut varies greatly across its complete length. Accordingly, any tendency of the vibrations to develop into harmonic vibrations which can be very serious for a cutting tool is reduced significantly. The significant reduction in wear and vibration dramatically reduces the susceptibility of any coating and base steel or base cobalt steel being destroyed by wear and localized heat points. The proposed shape may protect coatings that are added to enhance the life of the cutter. The cutting edge may be coated with physical vapour deposition techniques or other appropriate methods.

When chips of even depth with balanced dynamic loading are cut, such as with the cutter according to the present invention (as compared to the chips 7 and 11 shown in Figures 4 and 6 which vary so dramatically in their depth), significantly less horse power is required by the tool in order to achieve a given depth of cut.

In addition, because of the constant depth of cut taken out by the tool across the length of the cutting edge, and the spread of the loading along the edge, different parts of the cutting edge will be subject to a relatively constant degree of wear thereby enhancing the working life of the cutter. In fact, it is estimated that a substantial improvement in the edge life is achieved with a cutter according to the present invention over those previously available.

The cutter may be formed by grinding, form relieving or milling.

The grinding may be made by synthetic diamond such as Cubic Boron Nitride.

The cutter may have a finer pitch when it is intended to use the cutter on tough materials with a coarser pitch being provided when the material to be cut is weaker.

The cutter may have any number of desired flutes, for instance 3, 4, 5, 6, 7 or 10 finer or coarser pitch.

## Claims

1. A cutting tool including a cutting edge (12A) extending along the body, the cutting edge also extending at an angle to the intended direction of rotation whereby a leading part (15) of the cutting edge is arranged to cut a chip in advance of the remainder of the cutting edge (17) with respect to the intended direction of movement of the cutting part of the tool characterised in that the rate of change along the intended axis of rotation of the radial distance of the cutting edge from the intended axis of rotation undergoes a relatively sudden change in a region (16) towards the leading part (15), which leading part is arranged to cut a portion of a workpiece, and a portion of the cutting edge (17) trailing that region extends further from the intended axis of rotation than does that region.

2. A cutter tool as claimed in Claim 1 in which the region (16) is comprised by a point.

3. A cutter tool as claimed in Claim 2 in which the point comprises a sharp point.

4. A cutter tool as claimed in any preceding claim in which the region (16) comprises a corner when the cutting edge is viewed tangentially from in front of the intended direction of travel.

5. A cutter tool as claimed in any preceding claim in which the trailing cutting edge (17) from the region (16) extends further from the intended axis of rotation than the edge immediately adjacent to the region.

6. A cutter tool as claimed in any preceding claim in which the region is immediately adjacent to the leading part of the cutting edge.

7. A cutter tool as claimed in any preceding claim in which the cutting edge from the region (16) to the leading part of the cutting edge includes a linear edge (15).

8. A cutter tool as claimed in any preceding claim in which the cutting edge trailing the region includes a linear extent (17) when viewed from in front of the intended direction of rotation.

9. A cutter tool as claimed in any preceding claim in which the greater proportion of the axial extent of the cutting edge is comprised by an edge which increase in radial distance from the intended axis of rotation as the distance from the leading part increases.

10. A cutter tool as claimed in any preceding claim in which the greater proportion of the axial extent of the cutting edge (12A) is comprised by a linear edge when viewed from in front of the intended direction of advancement.

11. A cutter tool as claimed in any preceding claim in which the cutting edge extends outwardly and rearwardly at an angle of between 1° and 30° with respect to the intended axis of rotation of the tool.

12. A cutter tool as claimed in Claim 11 in which the cutting edge extends outwardly and rearwardly at an angle of between 1° and 30° with respect to the intended axis of rotation of the tool from the region.

13. A cutter tool as claimed in Claim 11 or 12 in which the cutting edge extends outwardly and rearwardly at an angle of between 1° and 30° with respect to the intended axis of rotation of the tool along the greater proportion of the axial extent of the cutting edge.

14. A cutter tool as claimed in any preceding claim in which the leading portion of the cutting edge adjacent to the leading point extends at a greater angle to the intended axis of rotation of the cutter tool than the majority of the remainder of the cutting edge.

15. A cutter tool as claimed in any preceding claim including a trailing portion (17) which is arranged to cut a chip last with respect to the intended direction of movement of the tool.

16. A cutter tool as claimed in Claim 15 in which the trailing portion extends at a greater angle to the intended direction of rotation than the majority of the remainder of the cutting edge.

17. A cutter tool as claimed in any preceding claim in which the leading part is arranged to be located nearer to the free end of the tool than the remainder of the cutting edge.

18. A cutter tool as claimed in any preceding claim in which an elongate edge includes a plurality of cutting edges (12A) spaced along its length.

19. A cutter tool as claimed in any preceding claim in which the cutting edge is asymmetric with respect to a line parallel to the rotational axis.

20. A method of manufacturing a cutter tool as claimed in any of claims 1-19 comprising making a cutter tool with a cutting edge (12A) extending along the body, the cutting edge also extending at an angle to the intended direction of rotation whereby a leading part (15) of the cutting edge is arranged to cut a chip in advance of the remainder of the cutting edge (17) with respect to the intended direction of movement of the cutting part of the tool characterised in that the method further comprises making the rate of change along the intended direction of rotation of the radial distance of the cutting edge from the intended axis of rotation undergo a relatively sudden change in a region (16) towards the leading part, and making a portion of the cutting edge (17) trailing that region extend further from the intended axis of rotation than does that region.

21. A method as claimed in Claim 20 comprising making the greater proportion of the axial extent of the cutting edge straight, when viewed from in front of the intended direction of advancement.

22. A method as claimed in Claim 20 or 21 comprising making the cutter tool by grinding the tool to create at least part of the cutting edge.

## Patentansprüche

1. Schneidwerkzeug mit einer Schneidkante (12A), die sich entlang des Korpus erstreckt wie auch unter einem Winkel zur vorgesehenen Drehrichtung, wobei ein Führungsteil (15) der Schneidkante derart angeordnet ist, daß er einen Span vor der verbleibenden Schneidkante (17) in bezug auf die vorgesehene Bewegungsrichtung des Schneidteiles des Werkzeuges schneidet, dadurch gekennzeichnet daß das Maß der Änderung entlang der vorgesehenen Drehachse des radialen Abstandes der Schneidkante von der vorgesehenen Drehachse eine relativ plötzliche Änderung in einem Bereich (16) gegen den Führungsteil (15) erfährt, wobei der Führungsteil derart angeordnet ist, daß er einen Teil eines Werkstückes schneidet, und wobei ein Teil der Schneidkante (17), der jenen Bereich überstreicht, sich von der vorgesehenen Drehachse aus weiter erstreckt, als jener Bereich.

2. Schneidwerkzeug nach Anspruch 1, wobei der Bereich (16) aus einem Punkt besteht.

3. Schneidwerkzeug nach Anspruch 2, wobei der Punkt ein scharfer Punkt ist.

4. Schneidwerkzeug nach einem der vorausgegangenen Ansprüche, wobei der Bereich (16) beim Betrachten der Schneidkante tangential von vorn der vorgesehenen Vorschubrichtung eine Ecke umfaßt.

5. Schneidwerkzeug nach einem der vorausgegangenen Ansprüche, wobei die ziehende Schneidkante (17) von dem Bereich (16) von der vorgesehenen Drehachse weiter erstreckt, als die Kante, die dem Bereich unmittelbar benachbart ist.

6. Schneidwerkzeug nach einem der vorausgegangenen Ansprüche, wobei der Bereich dem ziehenden Teil der Schneidkante unmittelbar benachbart ist.

7. Schneidwerkzeug nach einem der vorausgegangenen Ansprüche, wobei die Schneidkante vom Bereich (16) zum Führungsteil der Schneidkante eine lineare Kante (15) beinhaltet.

8. Schneidwerkzeug nach einem der vorausgegangenen Ansprüche, wobei die Schneidkante, die den Bereich überstreicht, in einer Ansicht von vor der vorgesehenen Drehrichtung gesehen eine lineare Streckung (17) aufweist.

9. Schneidwerkzeug nach einem der vorausgegangenen Ansprüche, wobei der größere Teil der axialen Erstreckung der Schneidkante von einer Kante eingenommen wird, die in radialem Abstand von der vorgesehenen Drehachse mit zunehmendem Abstand vom Führungsteil ansteigt.

10. Schneidwerkzeug nach einem der vorausgegangenen Ansprüche, wobei der größere Anteil der axialen Erstreckung der Schneidkante (12A) eingenommen wird von einer linearen Kante, in der vorgesehenen Vorschubrichtung von vorn gesehen.

11. Schneidwerkzeug nach einem der vorausgegangenen Ansprüche, wobei sich die Schneidkante unter einem Winkel von zwischen 1 und 30 Grad in bezug auf die vorgesehene Drehachse des Schneidwerkzeuges nach außen und nach hinten erstreckt.

12. Schneidwerkzeug nach Anspruch 11, wobei sich die Schneidkante in bezug auf die vorgesehene Drehachse des Schneidwerkzeuges von dem Bereich unter einem Winkel zwischen 1 und 30 Grad nach außen und nach hinten erstreckt.

13. Schneidwerkzeug nach Anspruch 11 oder 12, wobei sich die Schneidkante nach außen und nach hinten unter einem Winkel von 1 bis 30 Grad in bezug auf die vorgesehene Drehachse des Schneidwerkzeuges entlang des größeren Teiles der axialen Erstreckung der Schneidkante erstreckt.

14. Schneidwerkzeug nach einem der vorausgegangenen Ansprüche, wobei sich der Führungsteil der Schneidkante im Bereich des Führungspunktes unter einem größeren Winkel zur Vorgesehenen Drehachse des Schneidwerkzeuges erstreckt, als der überwiegende Teil der übrigen Schneidkante.

15. Schneidwerkzeug nach einem der vorausgegangenen Ansprüche, mit einem Schleppteil (17), der derart angeordnet ist, daß er einen Span in bezug auf die vorgesehene Vorschubbewegung des Werkzeuges zu letzt schneidet.

16. Schneidwerkzeug nach Anspruch 15, wobei sich der Schleppteil unter einem größeren Winkel zur vorgesehenen Drehrichtung erstreckt, als der überwiegende Teil des Restes der Schneidkante.

17. Schneidwerkzeug nach einem der vorausgegangenen Ansprüche, wobei der Führungsteil derart angeordnet ist, daß er dem freien Ende des Werkzeugs näher ist, als der übrige Teil der Schneidkante.

18. Schneidwerkzeug nach einem der vorausgegangenen Ansprüche, wobei eine lange Kante eine Mehrzahl von Schneidkanten (12A) aufweist, die sich in Abständen auf deren Länge befinden.

19. Schneidwerkzeug nach einem der vorausgegangenen Ansprüche, wobei die Schneidkante in bezug auf eine zur Drehachse parallelen Linie asymmetrisch ist.

20. Verfahren zum Herstellen eines Schneidwerkzeuges, so wie in einem der Ansprüche 1 bis 19 beansprucht, umfassend das Herstellen eines Schneidwerkzeuges mit einer Schneidkante (12A), die sich entlang des Korpus erstreckt und die sich ferner unter einem Winkel zur vorgesehenen Drehrichtung erstreckt, wobei ein Führungsteil (15) der Schneidkante derart angeordnet ist, daß er einen Span vor der verbleibenden Schneidkante (17) in bezug auf die vorgesehene Bewegungsrichtung des Schneidteiles des Werkzeuges schneidet, dadurch gekennzeichnet, daß das Verfahren weiterhin den folgenden Schritt umfaßt: das Maß der Änderung entlang der vorgesehenen Drehrichtung des radialen Abstandes der Schneidkante von der vorgesehenen Drehachse unterliegt einer relativ plötzlichen Änderung in einem Bereich (16) gegen den Führungsteil; man läßt einen Teil der Führungskante (17), die diesen Bereich überstreicht, sich von der vorgesehenen Drehachse aus weitererstrecken, als es dieser Bereich tut.

21. Verfahren nach Anspruch 20, dadurch gekennzeichnet, daß ein größerer Teil der axialen Erstreckung der Schneidkante geradlinig gemacht wird, in bezug auf die vorgesehene Vorschubrichtung von vorn gesehen.

22. Verfahren nach Anspruch 20 oder 21, dadurch gekennzeichnet, daß das Schneidwerkzeug durch Schleifen des Werkzeuges hergestellt wird, um wenigstens einen Teil der Schneidkante zu erzeugen.

## Revendications

1. Outil de coupe comprenant une arête coupante (12A) s'étendant le long du corps, l'arête coupante s'étendant aussi en faisant un angle avec la direction de rotation voulue, une partie avant (15) de l'arête coupante étant ainsi disposée de manière à tailler un copeau avant le reste de l'arête coupante (17) par rapport à la direction voulue du déplacement de la partie coupante de l'outil, caractérisé en ce que l'allure de variation, le long de l'axe de rotation voulu, de la distance radiale à laquelle l'arête coupante se trouve de l'axe de rotation voulu subit un changement relativement brusque dans une région (16) située vers la partie avant (15), cette partie avant étant disposée de manière à tailler une partie d'une pièce à usiner, et une partie de l'arête coupante (17) située en arrière de cette région s'étend plus loin de l'axe de rotation voulu que ne s'en étend cette région.

2. Outil de coupe selon la revendication 1, dans lequel la région (16) est constituée par un point.

3. Outil de coupe selon la revendication 2, dans lequel le pointe est constituée par une pointe aiguë.

4. Outil de coupe selon l'une quelconque des revendications précédentes, dans lequel la région (16) constitue un coin quand l'arête coupante est vue tangentiellement dans la direction opposée à la direction de déplacement voulue.

5. Outil de coupe selon l'une quelconque des revendications précédentes, dans lequel l'arête coupante arrière (17) depuis la région (16) s'étend plus loin de l'axe de rotation voulu que ne s'étend l'arête située au voisinage immédiat de cette région.

6. Outil de coupe selon l'une quelconque des revendications précédente, dans lequel la région se trouve au voisinage immédiat de la partie avant de l'arête coupante.

7. Outil de coupe selon l'une quelconque des revendications précédentes, dans lequel l'arête coupante, depuis la région (16) jusqu'à la partie avant de l'arête coupante, comprend une arête linéaire (15).

8. Outil de coupe selon l'une quelconque des revendications précédentes, dans lequel l'arête coupante en arrière de la région comprend une étendue linéaire (17) quand elle est vue dans la direction opposée à la direction de rotation voulue.

9. Outil de coupe selon l'une quelconque des revendications précédentes, dans lequel la proportion plus grande de l'étendue axiale de l'arête coupante est constituée par une arête dont la distance radiale depuis l'axe de rotation voulue augmente à mesure que la distance depuis la partie avant augmente.

10. Outil de coupe selon l'une quelconque des revendications précédentes, dans lequel la proportion plus grande de l'étendue axiale de l'arête coupante (12A) est constituée par une arête linéaire quand elle est vue dans une direction opposée à la direction d'avancement voulue.

11. Outil de coupe selon l'une quelconque des revendications précédentes, dans lequel l'arête coupante s'étend vers l'extérieur et vers l'arrière suivant un angle allant de 1° à 30° par rapport à l'axe de rotation voulu de l'outil.

12. Outil de coupe selon la revendication 11, dans lequel l'arête coupante s'étend vers l'extérieur et vers l'arrière suivant un angle allant de 1° à 30° par rapport à l'axe de rotation voulu de l'outil depuis la région.

13. Outil de coupe selon la revendication 11 ou 12, dans lequel l'arête coupante s'étend vers l'extérieur et vers l'arrière suivant un angle allant de 1° à 30° par rapport à l'axe de rotation voulu de l'outil le long de la proportion plus grande de l'étendue axiale de l'arête coupante.

14. Outil de coupe selon l'une quelconque des revendications précédentes, dans lequel la partie avant de l'arête coupante adjacente à la pointe avant s'étend en faisant avec l'axe de rotation voulu de l'outil de coupe un angle plus grand que la majeure partie du reste de l'arête coupante;

15. Outil de coupe selon l'une quelconque des revendications précédentes, comprenant une partie arrière (17) qui est disposée de manière à tailler un copeau en dernier par rapport à la direction voulue de déplacement de l'outil.

16. Outil de coupe selon la revendication 15, dans lequel la partie arrière s'étend en faisant avec la direction de rotation voulue suivant un angle plus grand que celui que fait la majeure partie du reste de l'arête coupante.

17. Outil de coupe selon l'une quelconque des revendications précédentes, dans lequel la partie avant est disposée de manière à se trouver plus près de l'extrémité libre de l'outil que le reste de l'arête coupante.

18. Outil de coupe selon l'une quelconque des revendications précédentes, dans lequel une arête allongée comprend une pluralité d'arêtes coupantes (12A) espacées sur sa longueur.

19. Outil de coupe selon l'une quelconque des revendications précédentes, dans lequel l'arête coupante est asymétrique par rapport à une ligne parallèle à l'axe de rotation.

20. Procédé de fabrication d'un outil de coupe selon l'une quelconque des revendications 1-19, comprenant la réalisation d'un outil de coupe comportant une arête coupante (12A) s'étendant le long du corps, l'arête coupante s'étendant aussi en faisant un angle avec la direction de rotation voulue, une partie avant (15) de l'arête coupante étant ainsi disposée de manière à tailler un copeau avant le reste de l'arête coupante (17) par rapport à la direction de déplacement voulue de la partie coupante de l'outil, caractérisé en ce que le procédé consiste, en outre, à faire en sorte que l'allure de variation, le long de la direction de rotation voulue, de la distance radiale à laquelle l'arête coupante se trouve de l'axe de rotation voulu subisse un changement relativement brusque dans une région (16) située vers la partie avant, et à faire en sorte qu'une partie de l'arête coupante (17) en arrière de cette région s'étende plus loin de l'axe de rotation voulu que ne s'en étend cette région.

21. Procédé selon la revendication 20 comprenant le fait de faire en sorte que la majeure partie de l'étendue axiale de l'arête coupante soit rectiligne, quand elle est vue dans une direction opposée à la direction d'avancement voulue.

22. Procédé selon la revendication 20 ou 21 comprenant le fait de réaliser l'outil de coupe en meulant l'outil pour créer au moins une partie de l'arête coupante.
